# EUROPÄISCHE PATENTANMELDUNG

(11) **EP 1 510 736 A1**
(43) Veröffentlichungstag der Anmeldung: **02.03.2005**
(21) Anmeldenummer: 04012452.1
(22) Anmeldetag: 26.05.2004
(51) Int. Cl.: F16J 15/10, F16J 15/12

(54) **Dichtelement**

(30) Priorität: 28.08.2003 DE 10339718
(71) Anmelder: VERITAS AG, 63571 Gelnhausen (DE); ElringKlinger AG, 72581 Dettingen (DE)
(72) Erfinder: Bock, Stefan, 63762 Grossostheim/Ringheim (DE); Rösch, Thomas, 63589 Linsengericht (DE)
(74) Vertreter: Grünecker, Kinkeldey, Stockmair & Schwanhäusser Anwaltssozietät

(57) **Zusammenfassung**

Die Erfindung bezieht sich auf ein Dichtelement (1), vorzugsweise zum Abdichten von Schnellkupplungen von Kraftstoffleitungen, insbesondere in Kraftfahrzeugen, mit einem Stützabschnitt (4), der zumindest teilweise aus einem elastischen Material hergestellt ist, und einem Dichtabschnitt (3), der aus einem gegenüber dem elastischen Material unterschiedlichen Material hergestellt ist, wobei das Dichtelement (1) am Umfang mindestens eine Anlagefläche (2c) und mindestens eine Dichtfläche (3c) aufweist. Ein derartiges Dichtelement (1) kann dadurch montagefreundlicher und kostengünstiger hergestellt werden in dem erfindungsgemäß vorgesehen ist, dass zumindest eine Anlagefläche (2c) durch den Stützabschnitt (2) und zumindest eine Dichtfläche (3a) durch den Dichtabschnitt (3) gebildet wird.

## Beschreibung

Die Erfindung betrifft ein Dichtelement, vorzugsweise zum Abdichten von Schnellkupplungen von Kraftstoffleitungen, insbesondere in Kraftfahrzeugen, mit einem Stützabschnitt, der zumindest teilweise aus einem elastischen Material hergestellt ist, und einem Dichtabschnitt, der aus einem gegenüber dem elastischen Material unterschiedlichen Material hergestellt ist, wobei das Dichtelement am Umfang mindestens eine Anlagefläche und mindestens eine Dichtfläche aufweist.

Derartige Dichtelemente sind aus dem Stand der Technik bekannt.

Die EP 0 817 929 zeigt ein Dichtungssystem für Refrigeratoren, bestehend aus einem Dichtring aus PTFE und einem zumindest teilweise aus Silikonkautschuk, PolyUrethan oder Tetrafluorethylen bestehender Vorspannring. Der Vorspannring hat einen elastischen Silikonkautschuk-Kem und ist von einer PTFE-Hülle umgeben. Der Vorspannring soll eine ausreichende Vorspannung für den Dichtring erzeugen.

Kraftstoffleitungen werden im Automobilbereich normalerweise mit Schnellkupplungen versehen, um bei der Montage oder im Reparaturfall Zeit zu gewinnen. Die Dichtungen haben dabei die Funktion keine flüssige oder gasförmige Leckage von Kohlenwasserstoffen über den gesamten Lebensdauerbereich zuzulassen. Gewöhnliche Dichtungen bestehen dabei aus O-Ring Systemen z.B. aus einem Viton (FPM) und einem Silikon-O-Ring. Dabei hat in der Regel der eine Ring eine Stützfunktion zum Erzeugen einer Vorspannung zwischen den abzudichtenden Elementen und der andere Ring eine Dichtfunktion zur Verhinderung von Leckagen.

Aufgrund verschärfter Emissionsrichtlinien reichen die derzeitigen O-Ring Systeme nicht mehr aus, da sie auch im normalen Temperaturbereich nicht permeationsdicht genug sind. Bei Temperaturwechseln lässt der FPM-O-Ring eine geringe Leckage zu, die der Silikon-O-Ring zurückhält. Beim anschließenden Erwärmen kann noch vermehrt Kraftstoff gasförmig entweichen. Federunterstützte Dichtungen aus PTFE können in vielen Anwendungen O-Ring Lösungen ersetzen, sind allerdings teurer und erfordern eine bessere Oberflächengüte der Dichtflächen.

Aufgabe der Erfindung ist es daher ein Dichtelement der eingangs genannten Art derart zu verbessem, dass einerseits die Montage im Einbauraum erleichtert und andererseits die Herstellungs- und Montagekosten herabgesetzt werden, wobei keine Veränderung an der derzeitigen Herstellung des abzudichtenden Gehäuses und Stutzens notwendig werden soll.

Die Aufgabe wird erfindungsgemäß gelöst durch ein Dichtelement, das dadurch gekennzeichnet ist, dass zumindest eine Anlagefläche durch den Stützabschnitt und zumindest eine Dichtfläche durch den Dichtabschnitt gebildet wird.

Das erfindungsgemäße Dichtelement erfüllt Stütz- und Dichtfunktion zugleich, da es an seiner Oberfläche zwei entsprechende Flächenabschnitte unterschiedlicher Materialien aufweist. Das elastische Stützmaterial verteilt den Druck gut über die Anlagefläche, wodurch die Oberflächenrauheiten der Anlagefläche ausgeglichen und ebenfalls gut abgedichtet werden. Der Dichtabschnitt, der aus einem anderen Material als dem elastischen Material des Stützabschnitts hergestellt ist, erzeugt an der Dichtfläche einen hohen Anpressdruck und eine gute Abdichtung. Diese Lösung ist einfacher als ein O-Ring System der oben genannten Art und bietet dennoch vergleichbare Emissionswerte. Insbesondere kann durch die erfindungsgemäße Lösung die Montage vereinfacht und der Bauraum verringert werden. Gegenüber den bekannten O-Ring Systemen ist dadurch die Verwendung eines zweiten Elements nicht erforderlich. Dies reduziert zugleich die Kosten für Material und Einbau.

Gegenüber dem bekannten O-Ring System ist keine verbesserte Oberflächengüte der Gegenfläche erforderlich, und somit auch keine Veränderung der derzeitigen Herstellung des abzudichtenden Gehäuses und Stutzens.

Gegenüber Federanordnungen ist das erfindungsgemäße Dichtelement langzeitstabil und unterliegt nur vemachlässigbar kleiner Dauerverformung unter dem Dichtdruck.

In einer bevorzugten Ausführungsform befinden sich eine Anlagefläche und eine Dichtfläche auf gegenüberliegenden Seiten des Dichtelements. So ist die Dichtwirkung besonders gut, wenn an der Dichtfläche eine Druckkraft von einem abzudichtenden Bauteil eingeleitet wird, und sich das Dichtelement dabei auf der gegenüberliegenden Seite abstützen kann. Auch kann dadurch ein sehr hoher Kontaktdruck aufgebaut werden.

Besonders günstig erweist sich die Ausführungsform bei der der Stützabschnitt fest mit dem Dichtabschnitt verbunden ist. So bildet das Dichtelement eine sehr kompakte Einheit und es verringert sich das Risiko, dass sich Stützabschnitt und Dichtabschnitt unter hoher Belastung voneinander lösen.

In einer vorteilhaften Weiterbildung der Erfindung ist der Stützabschnitt stoffschlüssig mit dem Dichtabschnitt verbunden. Unter dem Kontaktdruck, der von den abzudichtenden Bauteilen auf das Dichtelement ausgeübt wird, werden die beiden Abschnitte zusammengepresst. So bleibt der Dichtabschnitt gegenüber dem Stützabschnitt bewegbar und bringt sich bei geeigneter Anordnung, z.B. wenn sich beide Abschnitte auf gegenüberliegenden Seiten des Dichtelements befinden, selbst in eine optimale Position um z.B. auch unter Einleitung von Querkräften ideal abzudichten.

In einer besonders bevorzugten Ausführungsform ist das Dichtelement durch eine Verstärkungseinrichtung verstärkt. So kann ein noch größerer Kontaktdruck an der Dichtfläche aufgebaut werden, was die Dichtwirkung weiter verbessert.

Eine besonders geeignete Verstärkungseinrichtung ist dabei eine Federeinrichtung, die zumindest eine Feder aufweist. Eine Feder lässt sich hervorragend in das erfindungsgemäße Dichtelement integrieren.

Besonders günstig ist es dabei, wenn die Feder sich zumindest abschnittsweise innerhalb des Stützabschnitts befindet. Da dieser aus elastischem Material gefertigt ist, kommen die Federeigenschaften dabei auf vorteilhafte Weise zur Geltung. So ist die Stützwirkung des Stützabschnitts gerade bei hohen Druckkräften besonders gut.

Es stellt sich als vorteilhaft heraus, wenn die Feder ein gebogenes Federband ist. Ein Federband ist besonders flexibel und vielseitig einsetzbar, und kann zur optimalen Entfaltung der Federkraft unter Druckbelastung entsprechend geformt werden.

Dabei erweist es sich als besonders günstig, wenn die Feder im Wesentlichen ein U-Profil aufweist. Die Federkrümmung eignet sich dabei hervorragend zur Unterstützung der Dichtseite, auf der die Druckkraft in der Regel in das Dichtelement eingeleitet wird. Die gegenüberliegende, geöffnete Seite eignet sich besonders gut als Anlageseite.

Es erweist als vorteilhaft, wenn der Dichtabschnitt zumindest abschnittsweise aus fluorhaltigem Material hergestellt ist. Fluor wirkt gegenüber Kohlenwasserstoffen sperrend, so dass sich ein entsprechendes Dichtelement besonders gut für den Einsatz bei Kraftstoffleitungen im Automobilbereich eignet.

Auch ist es vorteilhaft, wenn der Dichtabschnitt aus einem Kunststoff hergestellt ist, da Kunststoffbauteile in der Regel mit geringem Kostenaufwand herstellbar sind. Auch ist die Formgebung für Kunststoffprodukte im Allgemeinen relativ einfach.

Als besonders vorteilhaft hat sich herausgestellt, den Dichtabschnitt aus einem Polymer herzustellen, da dieser Werkstoff gut verarbeitet werden kann und besonders formbeständig ist.

Unter den Polymerwerkstoffen erweist sich das Polyethylen als besonders günstig, da fluorhaltige Bestandteile gut in dessen Kunststoffmatrix eingebaut werden können.

Ferner eignet sich Polytetrafluorethylen (PTFE), insbesondere TFM, besonders gut für die Herstellung des Dichtabschnitts wegen seiner Sperrwirkung gegenüber Kohlenwasserstoffen.

Auch kann es sich als vorteilhaft erweisen, den Stützabschnitt aus einem Elastomer-Werkstoff herzustellen. Der weiche Elastomer kann Oberflächenrauheiten der Gegenfläche gut ausgleichen und abdichten.

Für die Verbesserung der Druckverteilung auf Dicht- und Anlagefläche kann es sich von Vorteil erweisen, dass die Außenfläche des Dichtelements zumindest einen im Wesentlichen bogenförmigen Abschnitt aufweist. Unter Druckbeanspruchung kann im Bereich des bogenförmigen Abschnitts eine hohe Flächenpressung und daher eine besonders gute Dichtwirkung - speziell bei Druckunterschieden beiderseits der Dichtung - erzielt werden.

Darüber hinaus kann es sich als vorteilhaft erweisen, wenn sich die Dichtfläche dabei im Wesentlichen innerhalb des bogenförmigen Abschnitts befindet. So ist der bogenförmige Abschnitt besonders geeignet um das Dichtelement gegenüber einem anderem Bauteil abzudichten, und der andere, vorzugsweise ebene Abschnitt ist besonders geeignet das Dichtelement gegenüber einem anderen Bauteil abzustützen.

In einer vorteilhaften Weiterbildung der Erfindung bildet der Dichtabschnitt eine Dichtlippe, wodurch sich eine besonders gute Dichtwirkung erzielen lässt.

In einer bevorzugten Ausführungsform bildet das Dichtelement einen Dichtring. Dadurch ist es speziell bei der Abdichtung von Verbindungen mit im Wesentlichen kreisförmigem Querschnitt einsetzbar.

Für die Verstärkung des zuvor erwähnten Dichtrings erweist es sich auch als vorteilhaft, wenn die Feder ein Federring ist und koaxial zum Dichtring angeordnet ist.

Es kann sich als vorteilhaft erweisen, dass die Anlagefläche an einem axialen Ende des Dichtrings im Wesentlichen senkrecht zur Achse des Dichtrings ausgebildet ist. Dadurch lässt sich das Dichtelement in axialer Richtung besser gegenüber einer ebenen Abstützfläche eines Anschlussteils abstützen.

Um die axialen Druckkräfte besser auf ein weiteres Anschlussteil übertragen zu können erweist es sich als vorteilhaft, wenn die Dichtfläche einem anderen axialen Ende des Dichtelements gegenüber der ebenen Anlagefläche ausgebildet ist.

Zur Aufnahme axialer Druckkräfte und demnach zur Erzeugung einer hohen Flächenpressung an der Dichtfläche ist besonders gut, wenn dabei die Stirnseite des Dichtelements gleichzeitig die Dichtseite ist. Die Dichtwirkung wird dadurch verbessert.

Um das Dichtelement zentrieren zu können erweist es sich als vorteilhaft, dass der Dichtring in radialer Richtung zumindest eine Anlagefläche aufweist. Dies erleichtert z.B. den Zusammenbau einer Schnellkupplung.

Auch bestimmte Größenverhältnisse erweisen sich als vorteilhaft, um eine besonders hohe Dichtwirkung zu erzielen: Gewöhnlich ergibt sich bei der Abdichtung zweier Bauteile eine Kontaktfläche zwischen dem Dichtabschnitt und dem abzudichtenden Bauteil. Diese Kontaktfläche ist in der Regel klein, allerdings herrscht dort i.d.R. eine hohe Flächenpressung. Die Funktion des Stützabschnitts ist es, das Dichtelement abzustützen und diesem dabei einen möglichst stabilen Halt zu bieten. Ist, im Verhältnis, der elastische Stützabschnitt deutlich größer als der Dichtabschnitt, so verbessert sich die Verteilung der Druckkräfte auf das elastische Stützmaterial und dementsprechend die Dichteigenschaft des Dichtelements. Als günstig kann es sich erweisen, wenn der Dichtabschnitt insgesamt nicht mehr als 25% der Querschnittsfläche des Dichtelements einnimmt.

In der praktischen Anwendung kann es sich als günstig erweisen, wenn der Innendurchmesser eines Dichtrings entsprechend der Erfindung dabei vorzugsweise in etwa 80-95%, bevorzugt 90% des Außendurchmessers beträgt.

In einer vorteilhaften Weiterbildung der Erfindung überstreicht die Dichtfläche vorzugsweise 60-90%, bevorzugt 75% der Bogenlänge des bogenförmigen Abschnitts des Dichtelements. Die sich ergebenden restlichen Oberflächensegmente des Stützabschnitts eignen sich besonders gut zur Anbringung von Zentrierflächen.

Weiterhin kann es sich als sehr günstig herausstellen, wenn dabei die Oberflächen des Stütz- und des Dichtabschnitts bündig ineinander übergehen. Dies verringert zum einen die Gefahr, dass sich die Stütz- und Dichtabschnitte voneinander lösen könnten, zum anderen bleibt die Dichtfunktion des Dichtelements auch dann gewährleistet, wenn der Kontakt mit einem abzudichtenden Bauteil genau an einer der Übergangsstellen gegeben ist.

In einem bevorzugten Herstellungsverfahren werden der Stützabschnitt und der Dichtabschnitt einstückig aneinander angeformt. Das heißt, dass entweder der Stützabschnitt an den Dichtabschnitt, oder der Dichtabschnitt an den Stützabschnitt einstückig angeformt wird. Dadurch lassen sich beide Abschnitte auf einfache Weise dauerhaft und fest verbinden, so dass die Übergänge an der Oberfläche beider Abschnitte bündig sind.

Als besonders vorteilhaftes Herstellungsverfahren erweist sich das Spritzen, insofern als dass der Stützabschnitt in den Dichtabschnitt eingespritzt wird. Das erfindungsgemäße Dichtelement soll bevorzugt aus Kunststoffen hergestellt werden. Diese lassen sich in aufgeweichtem Zustand durch Spritzen sehr einfach verarbeiten. Dies ermöglicht ferner eine Komponentenbauweise, wonach zuerst das Dichtelement gefertigt und in ausgehärtetem Zustand in eine Form gelegt wird. In einem weiteren Arbeitsgang wird dann der Stützabschnitt, der erfindungsgemäß zumindest teilweise aus einem elastischen Material besteht, rückseitig in die bestehende Form eingespritzt. Auch dadurch lassen sich beide Abschnitte dauerhaft und fest miteinander verbinden, so dass beide Abschnitte dabei bündig ineinander übergehen.

Nachfolgend wird die Erfindung und deren Anwendung und Funktionsweise anhand eines Ausführungsbeispiels näher erläutert.

Es zeigen:
Fig. 1: Eine Querschnittsansicht eines erfindungsgemäßen Dichtrings, Stütz- und Dichtabschnitt sind fest verbunden.
Fig. 2: : Eine Querschnittsansicht eines erfindungsgemäßen Dichtrings, Stütz- und Dichtabschnitt sind stoffschlüssig verbunden.
Fig. 3: : Eine Querschnittsansicht eines erfindungsgemäßen Dichtrings mit Federverstärkung.
Fig. 4: Eine Querschnittsansicht eines erfindungsgemäßen Dichtrings mit Federverstärkung und fertigungstechnisch bedingtem Freiraum am Stützabschnitt.
Fig. 5: Ansicht eines Federband im unverformtem Zustand und eine Querschnittsansicht im verformten Zustand (U-Profil).
Fig. 6: Ansicht eines Federrings im Querschnitt
Fig. 7: Eine Querschnittsansicht eines erfindungsgemäßen Dichtrings mit Federverstärkung zwischen zwei axial abzudichtenden Bauteilen.
Fig. 8: Eine Querschnittsansicht eines erfindungsgemäßen Dichtrings mit Federverstärkung zwischen zwei radial abzudichtenden Bauteilen.

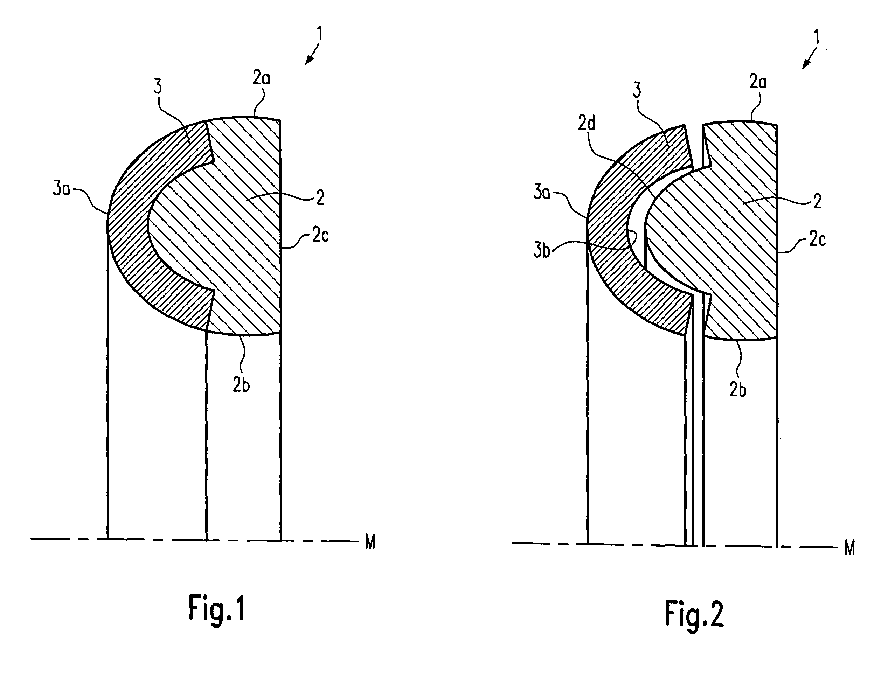

Nach dem beschriebenen Aspekt der Erfindung ist das Dichtelement 1 ein Dichtring, der durch Rotation des in Figur 1 skizzierten Querschnitts um die Achse A entsteht. Im Querschnitt der Figur 1 zeigt das Dichtelement 1 einen Stützabschnitt 2 und einen Dichtabschnitt 3.

Nachfolgend wird die Oberfläche des erfindungsgemäßen Dichtelement näher beschrieben: Zum besseren Verständnis ist dazu die Oberfläche des Dichtelement in Figur 1 in Segmente unterteilt. Der Stützabschnitt 2 bildet die Anlageflächen 2a, 2b und 2c, die zur Anlage an abzudichtende Bauteile vorgesehen sind. Die Anlageflächen 2a und 2b sind zur Anlage des Dichtrings in radialer Richtung vorgesehen, die Anlagefläche 2c ist zur Anlage in axialer Richtung vorgesehen. Der Dichtabschnitt 3 liegt an der Außenseite des Dichtelements 1 und bildet die Dichtfläche 3a. Die Oberflächen des Stützabschnitts 2a, 2b und des Dichtabschnitts 3a gehen bündig ineinander über.

Die eine axiale Endseite des Dichtrings bei Bezugszeichen 3a wird fortan als Stirnseite, und die andere, gegenüberliegende axiale Endseite des Dichtelements 1 bei Bezugszeichen 2c fortan als Anlageseite bezeichnet.

Im Querschnitt in Figur 1 weist das Dichtelement 1 an seiner Oberfläche einen geraden Abschnitt (Segment 2c) und einen bogenförmigen Abschnitt auf. Der bogenförmigen Abschnitt erstreckt sich über die Oberflächensegmente 2a, 2b und 3a.

Der Dichtabschnitt 3 liegt mittig an der Stirnseite des Dichtrings innerhalb des bogenförmigen Abschnitts. Diese Stirnseite ist zugleich die Dichtseite von welcher aus die Krafteinleitung von einem abzudichtenden Bauteil aus erfolgt.

Im Bereich des bogenförmigen Abschnitts 2a, 2b und 3a folgt die Kontur des Dichtelements 1 dabei im Wesentlichen dem Verlauf einer Parabel. Der Dichtabschnitt 3 weist in seinem bogenförmigen Verlauf vorzugsweise eine konstante Dicke auf und zeigt daher im Wesentlichen ein U-Profil. In dem gezeigten Ausführungsbeispiel überstreicht die Dichtfläche 3a in etwa 75% der Bogenlänge des bogenförmigen Abschnitts. Die angrenzenden Oberflächenabschnitte 2a und 2b eignen sich besonders als Anlage- bzw. Zentrierflächen in radialer Richtung.

An der Anlageseite am gegenüberliegenden axialen Ende des Dichtrings ist eine ebene Anlagefläche 2c ausgebildet. Im Querschnitt des Dichtrings in Figur 1 erscheint die ebene Anlagefläche als gerader Abschnitt, der sich in radialer Richtung senkrecht zur Achse A erstreckt.

Figur 1 zeigt ein Ausführungsbeispiel eines erfindungsgemäßen Dichtrings in dem der Stützabschnitt 2 fest mit dem Dichtabschnitt 3 verbunden ist. Dazu wird ein Abschnitt einstückig an den anderen Abschnitt angeformt. Dabei kann entweder der Dichtabschnitt 3 an den Stützabschnitt 2, oder der Stützabschnitt 2 an den Dichtabschnitt 3 einstückig angeformt werden. Bevorzugt wird der Stützabschnitt 2 in den Dichtabschnitt 3 eingespritzt.

Figur 2 zeigt ein weiteres Ausführungsbeispiel eines erfindungsgemäßen Dichtrings, wobei der Stützabschnitt 2 nicht fest mit dem Dichtabschnitt 3 verbunden ist. Die Konturen des Stützabschnitts 2 und des Dichtabschnitts 3 sind an den Kontaktstellen 2d und 3b zur Aufnahme des jeweils anderen Abschnitts genau aufeinander abgestimmt, so dass der Stützabschnitt 2 stoffschlüssig mit dem Dichtabschnitt 3 verbunden werden kann.

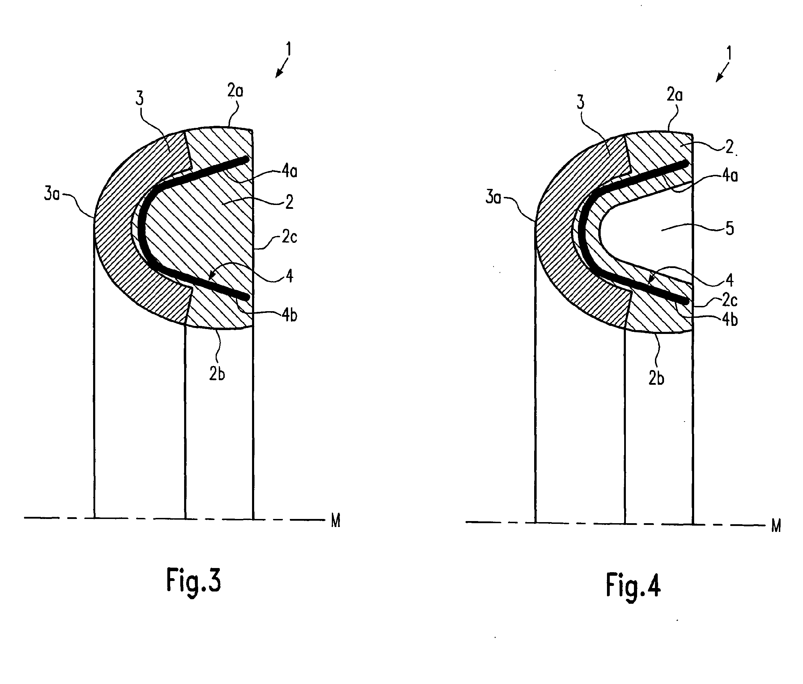

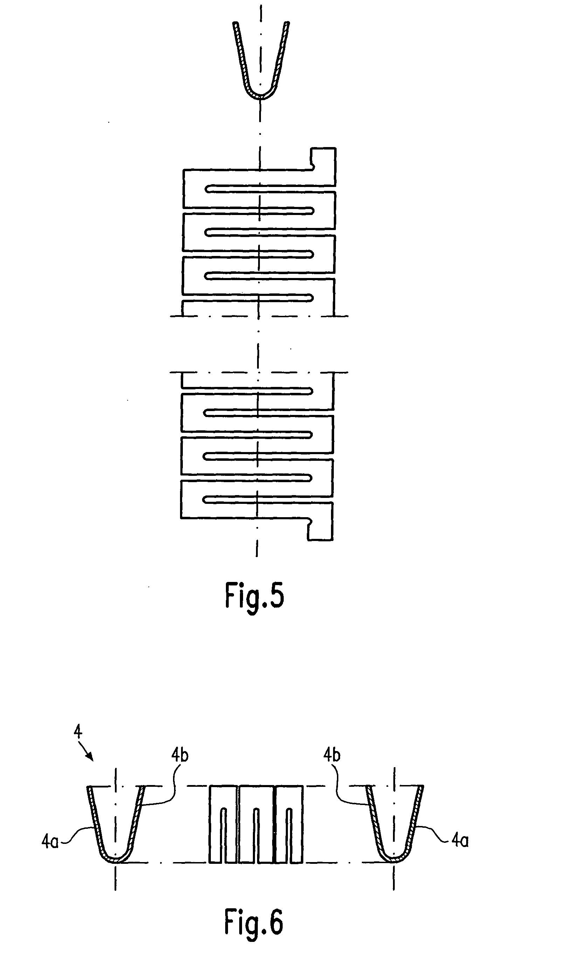

Figur 3 zeigt ein weiteres Ausführungsbeispiel eines erfindungsgemäßen Dichtrings, wobei der Dichtring mit einem Federring 4 verstärkt ist. Der Federring ist dabei aus einem zunächst ebenen Federband hergestellt, das in Figur 5 dargestellt ist. Zuerst wird das Federband umgeformt, so dass es in der Querschnittsansicht in Figur 6 senkrecht zur Längsachse ein U-Profil aufweist. Schließlich werden die freien Enden mit Überlappung verschweißt, so dass sich ein Federring 4 mit U-förmigem Querschnitt ergibt. Im Ausführungsbeispiel liegt der Federring 4 koaxial zum Dichtring und hat in etwa den gleichen mittleren Durchmesser. Der Federring 4 liegt vollständig innerhalb des Stützabschnitts 2 und ist vom elastischen Material des Stützabschnitts 2 umgeben. Die gebogene Seite des Federrings 4 zeigt zur Stirnseite des Dichtelements 1 und die offenen Seite des Federrings 4 öffnet sich zur Anlageseite hin. Die gebogene Seite des Federrings 4 verläuft im Wesentlichen entlang der Kontaktfläche zum Dichtabschnitt 3 knapp unterhalb der Oberfläche 2d des Stützabschnitts 2. Dabei entspricht die Krümmung des Federrings 4 auch im Wesentlichen der Krümmung an der Innenseite 3b des Dichtabschnitts 3. In der Profilansicht der Figur 3 erscheint der Federring 4 U-förmig und die Ringwände 4a und 4b erscheinen als gleich lange Schenkel, die in etwa bis zur Anlagefläche 2c reichen ohne über die Anlagefläche 2c vorzustehen.

Figur 4 zeigt im Wesentlichen das in Bezug auf Figur 3 beschriebene, vorangehende Ausführungsbeispiel. Bedingt durch das Fertigungsverfahren entsteht ein Freiraum 5 ausgehend von der Ebene der Anlagefläche 2c. Die Anlagefläche 2c weist somit eine Unterbrechung auf.

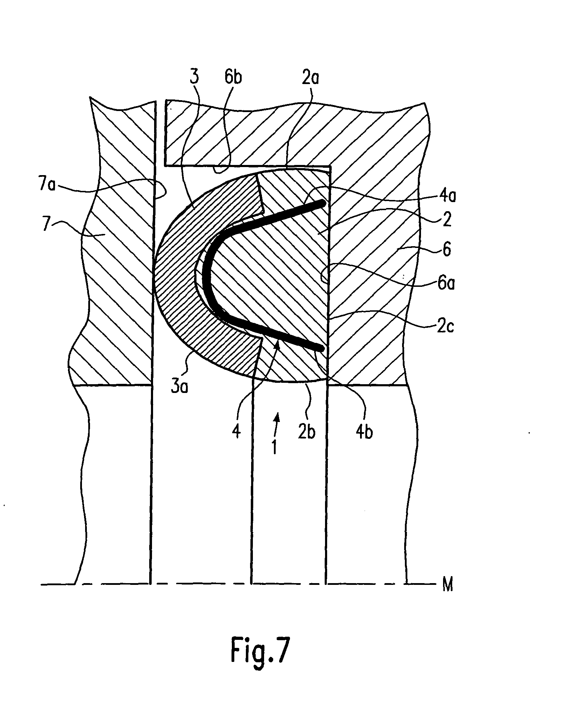

Nachfolgend wird die Anwendung und die Funktionsweise des erfindungsgemäßen Dichtelements anhand des in Figur 7 gezeigten Ausführungsbeispiels erläutert:

Das Dichtelement 1 ist dazu bestimmt zumindest zwei Bauteile 6,7 gegeneinander abzudichten. Zu diesem Zweck wird das Dichtelement 1 im Zwischenraum beider Bauteile 6,7 angeordnet, wobei die Anlageseite 2c an einem axialen Ende des Dichtrings an einer entsprechend dafür vorgesehenen Anlagefläche 6a angelegt wird. Der Abschnitt 2a des Dichtelements 1 ist in Anlage mit einem Abschnitt 6b des Bauteils 6 und ist dadurch außenseitig zentriert. Ebenso kann aber auch an der Innenseite 2b des Dichtelements 1 ein Zentrierabschnitt vorgesehen sein. Auf der der radialen Anlageseite 2a gegenüberliegenden Seite 2b ist gewöhnlich ein Spiel vorgesehen um eine radiale Aufweitung des Dichtrings 1 unter Druckbeanspruchung zuzulassen.

Zum Zweck der Dichtung befindet sich das Dichtelement 1 an seiner Stirnseite 3a in Kontakt mit einem weiteren abzudichtenden Bauteil 7. Dabei berührt die bogenförmige Oberfläche 3a des Dichtabschnitts 3 eine im Allgemeinen ebene Anlagefläche 7a des abzudichtenden Bauteils 7. Die gemeinsame Berührfläche 3a/7a ist dabei relativ klein und die Flächenpressung unter Druckbelastung in axialer Richtung an dieser Stelle entsprechend hoch. Dadurch wird eine hervorragende Dichtwirkung erreicht.

Auf der Anlageseite 2c stützt sich das Dichtelement von einem weiteren abzudichtenden Bauteil 6 ab. Die Kontaktfläche 6a des Bauteils 6 ist dabei ebenso wie die Anlagefläche 2c eben. Die vom Bauteil 7 eingeleiteten Druckkräfte werden über den Dichtabschnitt 3 auf den elastischen Stützabschnitt 2 übertragen, und an der Anlageseite 2c in das weitere abzudichtende Bauteil 6 eingeleitet. Der Stützabschnitt 2 ist erfindungsgemäß elastisch und gleicht unter Druckbeanspruchung Unebenheiten der Auflagefläche 6a aus.

Bei der federverstärkten Ausführungsform ist der Federring 4 in Richtung des Kraftflusses durch das Dichtelement 1 angeordnet. Die Federkrümmung entspricht im Wesentlichen der Krümmung an der Innenseite 3b des Dichtabschnitts 3 und nimmt dadurch die eingeleitete Kraft optimal auf. Der Federring 4 erstreckt sich dabei im Wesentlichen durch den gesamten elastischen Stützabschnitt 2 hindurch von der gekrümmten Oberfläche 2d, die mit der Innenseite 3b des Dichtabschnitts 3 in Kontakt ist, bis hin zur Anlagefläche 2c. Die Federwirkung wird dadurch erzielt, dass sich die Seitenwände 4a und 4b des Federrings 5 an ihrem freien Ende an der Anlagefläche 6a des Bauteils 6 abstützen. Der Federring 4 weitet sich unter Druckbelastung auf und drückt dabei den Dichtabschnitt 3 bzw. die Dichtfläche 3a gegen die Anlagefläche 7a des Bauteils 7. An der Kontaktstelle ist der Kontaktdruck bedingt durch die Rückstellwirkung des Federrings 4 sehr hoch, wodurch eine hervorragende Dichtwirkung erzielt wird.

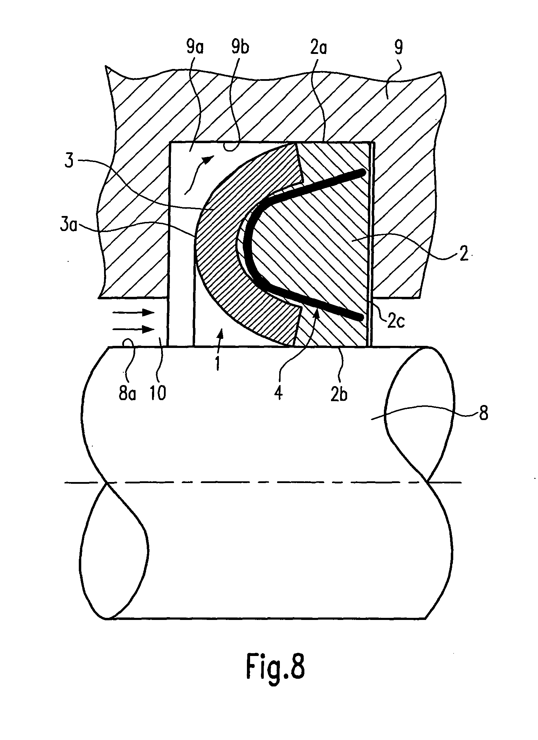

Der erfindungsgemäße Dichtring 1 ist auch zur Abdichtung in radialer Richtung geeignet. Figur 8 zeigt eine Einbausituation des in Figur 3 gezeigten Dichtrings 1, der unter Vorspannung zwischen einer Welle 8 und einem Gehäuseteil 9 in einer Nut 9a angeordnet ist. Der Dichtring 1 hat an seiner Stirnseite 3a und der gegenüberliegenden Seite 2c Spiel um sich unter der Vorspannung axial aufzuweiten. Der Dichtring 1 wird so vorgespannt, dass die gesamte Anlagefläche 2b und ein Abschnitt der Dichtfläche 3a an der Umfläche 8a der Welle 8 anliegt. Auch an der radialen Anlageseite 9b der Nut 9a ist die gesamte Anlagefläche 2a und ein Abschnitt der Dichtfläche 3a in Anlage. Die Feder 4 erzeugt eine Kraft, die der radialen Vorspannung entgegenwirkt und sorgt daher an den Anlageflächen 2a, 2b und 3a in radialer Richtung für einen hohen Kontaktdruck.

Eine durch den Spalt 10 zwischen der Welle 8 und dem Gehäuseteil 9 fließende Flüssigkeit (z.B. Kraftstoff) trifft im Dichtspalt auf die Dichtfläche 3a. Erfindungsgemäß ist der Dichtabschnitt 3 immer der abzudichtenden Seite zugewandt, von der aus das Medium (z.B. Kraftstoff) auf den Dichtring 1 trifft. Der Dichtabschnitt 3 besteht aus PTFE, einem Werkstoff, der gegenüber Kohlenwasserstoffen sperrend wirkt. Ein Grossteil des Kraftstoffstoffs wird somit bereits vom Dichtabschnitt 3 zurückgehalten. Bedingt durch die Oberflächenrauheit der Welle 8 bilden sich jedoch kleine Kanäle durch die geringe Leckageströme über den Dichtabschnitt 3 gelangen. In axialer Richtung schließt der Stützabschnitt 2 an den Dichtabschnitt 3 an. Nach dem Durchlaufen eines solchen Rauhigkeitskanals im Dichtabschnitt 3 trifft der Leckagestrom auf das elastische Material des Stützabschnitts 2. Unter der radialen Vorspannung und unterstützt durch die Feder 4 dichtet der weiche Elastomer des Stützabschnitts 2 die verbleibenden Lücken entlang der Rauhigkeitskanäle ab. Somit wird der Weg für die Leckageströme versperrt und die Welle 8 gegenüber dem Gehäuseteil 9 ideal abgedichtet.

## Patentansprüche

1. Dichtelement (1), vorzugsweise zum Abdichten von Schnellkupplungen von Kraftstoffleitungen, insbesondere in Kraftfahrzeugen, mit einem Stützabschnitt (2), der zumindest teilweise aus einem elastischen Material hergestellt ist, und einem Dichtabschnitt (3), der aus einem gegenüber dem elastischen Material unterschiedlichen Material hergestellt ist, wobei das Dichtelement (1) am Umfang mindestens eine Anlagefläche (2c) und mindestens eine Dichtfläche (3a) aufweist, **dadurch gekennzeichnet, dass** zumindest eine Anlagefläche (2c) durch den Stützabschnitt (2) und zumindest eine Dichtfläche (3a) durch den Dichtabschnitt (3) gebildet wird.

2. Dichtelement (1) nach Anspruch 1, **gekennzeichnet dadurch, dass** sich eine Anlagefläche (2c) und eine Dichtfläche (3a) auf gegenüberliegenden Seiten des Dichtelements (1) befinden.

3. Dichtelement (1) nach zumindest einem der vorhergehenden Ansprüche, **gekennzeichnet dadurch, dass** der Stützabschnitt (2) fest mit dem Dichtabschnitt (3) verbunden ist.

4. Dichtelement (1) nach zumindest einem der vorhergehenden Ansprüche, **gekennzeichnet dadurch, dass** der Stützabschnitt (2) stoffschlüssig mit dem Dichtabschnitt (3) verbunden ist.

5. Dichtelement (1) nach zumindest einem der vorhergehenden Ansprüche, **gekennzeichnet dadurch, dass** das Dichtelement (1) durch eine Verstärkungseinrichtung (4) verstärkt ist.

6. Dichtelement (1) nach zumindest einem der vorhergehenden Ansprüche, **gekennzeichnet dadurch, dass** die Verstärkungseinrichtung durch eine Federeinrichtung gebildet wird, die zumindest eine Feder (4) aufweist.

7. Dichtelement (1) nach zumindest einem der vorhergehenden Ansprüche, **gekennzeichnet dadurch, dass** sich die Feder (4) zumindest abschnittsweise innerhalb des Stützabschnitts (2) befindet.

8. Dichtelement (1) nach zumindest einem der vorhergehenden Ansprüche, **gekennzeichnet dadurch, dass** die Feder (4) ein gebogenes Federband ist.

9. Dichtelement (1) nach zumindest einem der vorhergehenden Ansprüche, **gekennzeichnet dadurch, dass** die Feder (4) im Wesentlichen ein U-Profil aufweist.

10. Dichtelement (1) nach zumindest einem der vorhergehenden Ansprüche, **gekennzeichnet dadurch, dass** der Dichtabschnitt (3) zumindest teilweise aus einem fluorhaltigen Material hergestellt ist.

11. Dichtelement (1) nach zumindest einem der vorhergehenden Ansprüche, **gekennzeichnet dadurch, dass** der Dichtabschnitt (3) zumindest teilweise aus einem Kunststoff hergestellt ist.

12. Dichtelement (1) nach zumindest einem der vorhergehenden Ansprüche, **gekennzeichnet dadurch, dass** der Dichtabschnitt (3) zumindest teilweise aus einem Polymer hergestellt ist.

13. Dichtelement (1) nach zumindest einem der vorhergehenden Ansprüche, **gekennzeichnet dadurch, dass** der Dichtabschnitt (3) zumindest teilweise aus einem Polyethylen hergestellt ist.

14. Dichtelement (1) nach zumindest einem der vorhergehenden Ansprüche, **gekennzeichnet dadurch, dass** der Dichtabschnitt (3) aus PTFE, insbesondere TFM, hergestellt ist.

15. Dichtelement (1) nach zumindest einem der vorhergehenden Ansprüche, **gekennzeichnet dadurch, dass** der Stützabschnitt (2) zumindest teilweise aus einem Elastomer hergestellt ist.

16. Dichtelement (1) nach zumindest einem der vorhergehenden Ansprüche, **gekennzeichnet dadurch, dass** die Außenfläche des Dichtelements (1) im Querschnitt gesehen zumindest einen im Wesentlichen bogenförmigen Abschnitt (2a, 2b, 3a) aufweist.

17. Dichtelement (1) nach zumindest einem der vorhergehenden Ansprüche, **gekennzeichnet dadurch, dass** sich die Dichtfläche (3a) im Wesentlichen innerhalb des bogenförmigen Abschnitts (2a, 2b, 3a) befindet.

18. Dichtelement (1) nach zumindest einem der vorhergehenden Ansprüche, **gekennzeichnet dadurch, dass** der Dichtabschnitt (3) eine Dichtlippe bildet.

19. Dichtelement (1) nach zumindest einem der vorhergehenden Ansprüche, **gekennzeichnet dadurch, dass** das Dichtelement (1) einen Dichtring bildet.

20. Dichtelement (1) nach zumindest einem der vorhergehenden Ansprüche, **gekennzeichnet dadurch, dass** die Feder (4) ein Federring ist und koaxial zum Dichtring angeordnet ist.

21. Dichtelement (1) nach zumindest einem der vorhergehenden Ansprüche, **gekennzeichnet dadurch, dass** die Anlagefläche (2c) an einem axialen Ende des Dichtrings im Wesentlichen senkrecht zur Achse des Dichtrings ausgebildet ist.

22. Dichtelement (1) nach zumindest einem der vorhergehenden Ansprüche, **gekennzeichnet dadurch, dass** die Dichtfläche (3a) an einem anderen axialen Ende des Dichtrings gegenüber der Anlagefläche (2c) ausgebildet ist.

23. Dichtelement (1) nach zumindest einem der vorhergehenden Ansprüche, **gekennzeichnet dadurch, dass** eine Stirnseite (3a) des Dichtrings gleichzeitig die Dichtseite ist.

24. Dichtelement (1) nach zumindest einem der vorhergehenden Ansprüche, **gekennzeichnet dadurch, dass** der Dichtring in radialer Richtung zumindest eine Anlagefläche (2a, 2b) aufweist.

25. Dichtelement (1) nach zumindest einem der vorhergehenden Ansprüche, **gekennzeichnet dadurch, dass** der Innendurchmesser des Dichtrings vorzugsweise in etwa 80-95%, bevorzugt 90% des Außenradius des Dichtrings beträgt.

26. Dichtelement (1) nach zumindest einem der vorhergehenden Ansprüche, **gekennzeichnet dadurch, dass** der Dichtabschnitt (3) nicht mehr als 25% der Querschnittsfläche des Dichtelements (1) einnimmt.

27. Dichtelement (1) nach zumindest einem der vorhergehenden Ansprüche, **gekennzeichnet dadurch, dass** die Dichtfläche (3a) vorzugsweise 60-90%, bevorzugt 75% der Bogenlänge des bogenförmigen Abschnitts (2a, 2b, 3a) überstreicht.

28. Dichtelement (1) nach zumindest einem der vorhergehenden Ansprüche, **gekennzeichnet dadurch, dass** der Stützabschnitt (2) und der Dichtabschnitt (3) bündig ineinander übergehen.

29. Verfahren zur Herstellung eines Dichtelements (1) nach zumindest einem der vorhergehenden Ansprüche, **gekennzeichnet dadurch, dass** der Stützabschnitt (2) und der Dichtabschnitt (3) einstückig aneinander angeformt werden.

30. Verfahren zur Herstellung eines Dichtelements (1) nach zumindest einem der vorhergehenden Ansprüche, **gekennzeichnet dadurch, dass** der Stützabschnitt (2) in den Dichtabschnitt (3) eingespritzt wird.
